# EUROPEAN PATENT SPECIFICATION

(11) **EP 2 374 826 B1**
(45) Date of publication and mention of the grant of the patent: **16.04.2014**
(21) Application number: 09831955.1
(22) Date of filing: 10.12.2009
(51) Int. Cl.: C09D 175/16, C09D 171/00, C09D 163/00, C09D 167/07, C09D 4/00, C08F 283/01, C08F 290/06, C09D 5/24, C09D 7/12, C08F 2/44

(54) **IN-MOLD COATING COMPOSITION AND IN-MOLD-COATED MOLDED PRODUCT**
HINTERSPRITZTE BESCHICHTUNGSZUSAMMENSETZUNG UND FORMPRODUKT MIT HINTERSPRITZTER BESCHICHTUNG
COMPOSITION DE REVÊTEMENT DANS LE MOULE ET CORPS MOULÉ REVÊTU DANS LE MOULE

(30) Priority: 10.12.2008 JP 2008314713
(43) Date of publication of application: 12.10.2011
(73) Proprietor: Dai Nippon Toryo Co., Ltd., Konohana-ku Osaka-shi Osaka 554-0012 (JP)
(72) Inventor: OOTA, Kenji, Komaki-shi Aichi 485-0075 (JP); SHIROZA, Shinichirou, Komaki-shi Aichi 485-0075 (JP); YONEMOCHI, Kenji, Komaki-shi Aichi 485-0075 (JP)
(74) Representative: Gervasi, Gemma
(86) International application number: PCT/JP2009/070709
(87) International publication number: WO 2010/067851

(56) References cited:
- EP-A1- 0 461 320
- JP-A- 2003 301 018
- JP-A- 2006 257 368
- JP-A- 2009 051 124
- US-A- 4 414 173
- US-A- 4 515 710
- US-A- 4 534 888

## Description

### TECHNICAL FIELD

This invention relates to an in-mold coating composition and an in-mold-coated molded product, and more particularly to an in-mold-coated molded product obtained by a so-called in-mold coating molding method (which is also referred to as an IMC method or an in-mold coating method) in which a thermoplastic molding material or a thermosetting plastic molding material is molded in a mold by means of an injection molding method, an injection compression molding method, an injection press molding method, a compression molding method or a reaction injection molding method, and then an in-mold coating composition is injected between the surface of the obtained molded product and the surface of a mold cavity and cured in the mold to produce an integral molded product in which the in-mold coating composition adheres to the surface of the molded plastic product.

### BACKGROUND ART

For the purpose of lengthening a life of product by improving a scratch resistance in the surface of a molded plastic product used for automobiles, construction machines, or architectural materials, or improving a weathering resistance, coating a molded product has been heretofore used widely. In this case, an electrostatic coating is generally used for improving a coating efficiency in top coating or reducing the emission of volatile organic compounds (VOC) to the atmosphere. However, the volume resistivity value of molded plastic product is usually 10¹⁰ Ω/cm² or more, and hence it is difficult to coating uniformly with a coating material even if the electrostatic coating method is used. Thus, when these molded products are subjected to the electrostatic coating, a spray coating with a conductive primer coating material is carried out for the purpose of forming a coating film having conductive properties. However, there is recently a strong interest about environmental issues, and the tendency to limit severely the emission of volatile organic compounds, what is called VOC, from paint factories to the atmosphere becomes stronger, and thus the development of an alternative technique to the conventional conductive primer is imperative.

Under such a situation, an in-mold coating molding method of injecting a coating material between the surface of a molded plastic product formed in a mold and the cavity surface of the mold, and thereafter curing the coating material in the mold to produce an integral molded product in which a coating film adheres to the surface of the molded plastic product attracts attention.

Since the in-mold coating molding method forms a coating film in a mold, the coating composition comprises no solvent and 100% coating film is formed in the mold. Thus, such a method emits no VOC into the atmosphere, and generates less waste, and has less impact on the environment. Also, the coating film is cured with a radical reaction by the heat of a mold, the heat of a thermoplastic rosin in resin-plasticizing, and the heat of reaction of a thermosetting resin, and hence the expenditure of energy in forming of the coating film is lower as compared with reaction through the heat of a general drying furnace or ultraviolet irradiation. It is, therefore, said to be an excellent coating method.

The coating material used for in-mold coating molding is required to be cured for a short time with no solvents because of forming a coating film in a mold. Thus, the development is more difficult than that of general coating materials. In an already-developed conductive coating material used for an in-mold coating molding method, carbon black is used as a conductive material (for example, see Patent Documents 1 and 2).

Recently, design or color tone is emphasized, and thereby a coating material for in-mold coating molding having conductive properties and light color is required for the coating color of top coating material, and specifically for a light-colored metallic or pearl coating material. For such purpose, graphite is mainly used as a conductive material and titanium dioxide is contained as a coloring pigment for light color. The cured coating film takes on gray, but has insufficient whiteness degree and brightness if coated with a white color-based coating material having a poor hiding power and high brightness in top coating (for example, see Patent Document 3).

On the other hand, coating materials containing an organic solvent are generally used as a white conductive coating material (for example, see Patent Documents 4-8). However, they emit a large amount of VOC to the atmosphere in coating as mentioned above, and thus the development of coating materials of non-solvent type is demanded from the viewpoint of dealing with recent environment issues.

### CITED DOCUMENTS LIST

### PATENT DOCUMENT

Patent Document 1: JP-A-S60-212467
Patent Document 2: JP-A-H04-226116
Patent Document 3: JP-A-H06-320681
Patent Document 4: JP-A-2004-75735
Patent Document 5: JP-A-2004-217872
Patent Document 6: JP-A-2004-262988
Patent Document 7: JP-A-2005-171024
Patent Document 8: JP-A-2006-232 884

Patent application EP 461320 A1, equivalent to JP-A-H04-226116 mentioned above, discloses a fiber reinforced polyester (FRP) molding coated using a free radical peroxide initiated thermosetting composition of at least one polymerizable epoxy based oligomer having at least two acrylate groups, at least one copolymerizable ethylenically unsaturated monomer, at least one copolymerizable monoethylenically unsaturated compound having a -CO- group and a -NH2, -NH- and/or -OH group, polyvinyl acetate, at least one zinc salt ofa fatty acid, at least one calcium salt of a fatty acid, at least one accelerator for a peroxide initiator, conductive carbon black, a filler such as talc and containing as an additive a soluble ionic organic salt, which is an ammonium arylsulphonate.

Patents Nos. US 4,414,173 and US 4,534,888 disclose a FRP molding coated using a free radical peroxide initiated thermosetting composition of at least one polymerizable epoxy based oligomer having at least two acrylate groups, at least one copolymerizable ethylenically unsaturated monomer, at least one copolymerizable monoethylenically unsaturated compound having a -CO- group and a -NH2, -NH- and/or -OH group, polyvinyl acetate, at least one zinc salt of a fatty acid having at least 10 carbon atoms, at least one accelerator for a peroxide initiator, conductive carbon black, a filler such as talc and a copolymerizable or cocurable compound selected from the group consisting of at least one polyoxyalkylene glycol oligomer having two acrylate groups and/or at least one polyurethane oligomer having two acrylate groups.

Patent US 4,515,710, equivalent to JP-A-S60-212467 mentioned above, discloses an FRP molding coated using a free radical peroxide initiated thermosetting composition of at least one polymerizable epoxy based oligomer having at least two acrylate groups, at least one copolymerizable ethylenically unsaturated monomer, at least one copolymerizable monoethylenically unsaturated compound having a -CO-group and a -NH2, -NH- and/or -OH group, carboxylated polyvinyl acetate, at least one zinc salt of a fatty acid, at least one calcium salt of a fatty acid, at least one copolymerizable tri or tetra acrylate, at least one accelerator for a peroxide initiator, conductive carbon black, a filler such as talc and at least one polyoxyalkylene glycol oligomer having two acrylate groups.

### SUMMARY OF THE INVENTION

### PROBLEMS TO BE SOLVED BY THE INVENTION

It is, therefore, an object of the invention to provide an in-mold coating composition having an excellent adhesion to SMC (sheet molding compound), BMC (bulk molding compound) or a thermosetting molding resin having dicyclopentadiene as a main component, or a thermoplastic molding resin such as ABS resin, polyamide resin, PPE resin, PC/PET, PC/PBT or PC/ABS alloy, and an in-mold-coated molded product formed by coating effectively with a white conductive coating film in a mold.

### MEANS OF SOLVING THE PROBLEMS

The inventors have made various studies in order to solve the above-mentioned problems and discovered that the above object can be achieved by the following constitutions, and as a result the invention has been accomplished.

That is to say, according to the invention, there is provided an in-mold coating composition characterized by comprising the following components:
(A) at least one selected from a urethane oligomer, an epoxy oligomer, a polyester oligomer and a polyether oligomer each having a (meth)acryloyl group, or an unsaturated polyester resin,
(B) a monomer capable of copolymerizing with the (A) component,
(C) a conductive particle being an inorganic particle whose surface is coated with a conductive metal oxide particle, and
(D) an organic peroxide polymerization initiator, wherein
   mass ratios of the (A) and (B) components satisfy (A)/(B) = 20/80-80/20,
   a mass ratio of the (C) component satisfies (C)/{(A)+(B)} = 5/100-50/100, and
   a mass ratio of the (D) component satisfies (D)/{(A)+(B)} = 0.1/100-5/100.

According to the invention, there is also provided an in-mold-coated molded product obtained with an injection molding method comprising the following steps of:
clamping a mold composed of a fixed mold portion and a movable mold portion,
molding a resin in a cavity of the mold,
injecting an in-mold coating composition in the cavity,
curing the injected in-mold coating composition, and
removing a coated molded product after the curing of the in-mold coating composition, wherein the in-mold coating composition is the above-mentioned in-mold coating composition.

### EFFECTS OF THE INVENTION

According to the invention, there can be provided an in-mold-coated molded product having a light-colored conductive coating film with an excellent adhesion by curing an in-mold coating composition on the surface of a molded product of a thermosetting molding resin or a thermoplastic molding resin in a mold, so that brighter color development of the top coating film can be achieved by the subsequent electrostatic top coating. Also, it is able to transfer the surface of a mold accurately by an in-mold coating molding method, and it is able to effectively-reduce a sink mark or a weld line occurring in a rib or a boss portion and accompanying the shrinkage of a molding resin which is unsolvable in a usual coating.

### BRIEF DESCRIPTION OF THE DRAWINGS

FIG. 1 is a schematic configuration diagram showing an embodiment for forming an in-mold-coated molded product according to the invention by means of a compression molding method.
FIG. 2 is a schematic configuration diagram showing an embodiment for forming an in-mold-coated molded product according to the invention by means of an injection molding method for a thermoplastic resin molding material.
FIG. 3 is a schematic configuration diagram showing an embodiment for forming an in-mold-coated molded product according to the invention by means of a RIM method.

### MODE FOR CARRYING OUT THE INVENTION

The in-mold-coated molded product according to the invention will be described concretely below.

The in-mold-coated molded product according to the invention consists of a molded product composed of a thermosetting molding resin or a thermoplastic molding resin and a coating film of an in-mold coating composition formed on the surface thereof.

As the thermosetting molding resin may be used molding materials known heretofore, and mentioned, for example, a fiber-reinforced plastic molding material, referred to as SMC or BMC, containing an unsaturated polyester resin, an epoxy acrylate resin or a phenol resin as a matrix, an RTM molding material containing an unsaturated polyester resin, an epoxy acrylate resin or an epoxy resin as a matrix, a RIM molding material using dicyclopentadiene, or urethane.

As the thermoplastic molding resin may be used various molding materials known heretofore, and mentioned, for example, polycarbonate, polymethyl methacrylate, polystyrene, polyamide, polyethylene terephthalate, polybutylene terephthalate, polyphenylene ether, ABS resin, or an alloy material thereof.

Such molding materials may include, for example, a reinforcing agent such as glass fiber, carbon fiber, or calcium carbonate whisker, an ultraviolet absorbing agent, an antioxidant, or a release agent, so as to satisfy characteristics depending on the use application.

Next, the in-mold coating material used in the invention will be described.

The in-mold coating material used in the invention comprises the following essential components:
(A) at least one selected from a urethane oligomer, an epoxy oligomer, a polyester oligomer and a polyether oligomer each having a (meth)acryloyl group, or an unsaturated polyester resin,
(B) a monomer capable of copolymerizing with the (A) component,
(C) a conductive particle formed by coating a surface of an inorganic particle with a conductive metal oxide particle, and
(D) an organic peroxide polymerization initiator, wherein
   mass ratios of the (A) and (B) components satisfy (A)/(B) = 20/80-80/20,
   a mass ratio of the (C) component satisfies (C)/{(A)+(B)} = 5/100-50/100, and
   a mass ratio of the (D) component satisfies (D)/{(A)+(B)} = 0.1/100-5/100. As necessary, the in-mold coating material used in the invention further comprises an optional component such as an inorganic particle, such as calcium carbonate, or talc, having an average particle diameter of not less than 0.1 µm but not more than 20 µm, a coloring pigment such as titanium dioxide, a low-shrinking agent such as a diallyl phthalate oligomer, a saturated polyester resin or a polyvinyl acetate resin, or a polymethyl methacrylate resin, a release agent, an ultraviolet absorbing agent, an antioxidant, an anti-foaming agent, an antistatic agent, a polymerization inhibitor, or a curing accelerator.

### (a) As to (A) component

The (A) component used in the in-mold coating composition used in the invention is at least one selected from a urethane oligomer, an epoxy oligomer, a polyester oligomer and a polyether oligomer each having a (meth)acryloyl group, or an unsaturated polyester resin.

### (a-1) Oligomer having a (meth)acryloyl group

The oligomer having the (meth)acryloyl group can include, for example, urethane (meth)acrylate, polyester (meth)acrylate, epoxy (meth)acrylate and polyether (meth)acrylate.

The mass average molecular weights of these oligomers may vary depending on their types, and are generally suitable to be about 300-30,000, preferably 500-10,000. The oligomer having the (meth)acryloyl group is suitable to have a (meth)acryloyl group of at least 2-8, preferably 2-6 in one molecular.

### (a-1-1) Urethane (meth)acrylate oligomer

The urethane (meth)acrylate oligomer as a oligomer used in the invention can be produced with a usual method, for example, by mixing (1) an organic diisocyanate compound, (2) an organic polyol compound and (3) hydroxyalkyl (meth)acrylate at an abundance ratio such that NCO/OH ratio is, for example, 0.8-1.0, preferably 0.9-1.0. When the hydroxyl group is present in excess, or when hydroxyalkyl (meth)acrylate is used in large amounts, an oligomer having a lot of hydroxyl groups is obtained.

Concretely, (1) the organic diisocyanate compound is reacted with (2) the organic polyol compound, for example, in the presence of a catalyst for urethane reaction such as dibutyltin laurate to obtain an isocyanate-terminated polyurethane prepolymer. Then, the urethane (meth)acrylate oligomer can be produced by reacting (3) hydroxyalkyl (meth)acrylate until reaction with a free isocyanate group is mostly completed. With respect to ratio of (2) organic polyol compound and (3) hydroxyalkyl (meth)acrylate, the amount of the former is suitable, for example, to be 0.1-0.5 moles based on 1 mole of the latter.

As (1) the organic diisocyanate compound used in the reaction can be used, for example, 1,2-diisocyanatoethane, 1,2-diisocyanatopropane, 1,3-diisocyanatopropane, hexamethylene diisocyanate, lysine diisocyanate, trimethylhexamethylene diisocyanate, tetramethylene diisocyanate, bis(4-isocyanatocyclohexyl)methane, methylcyclohexane-2,4-diisocyanate, methylcyclohexane-2,6-diisocyanate, 1,3-bis(isocyanatomethyl)cyclohexane, 1,3-bis(isocyanatoethyl)cyclohexane, 1,3-bis(isocyanatomethyl)benzene, or 1,3-bis(isocyanato-1-methylethyl)benzene. These organic diisocyanate compounds can be used alone or as a mixture of two or more.

As (2) the organic polyol compound used in the reaction can preferably be mentioned organic diol compounds, for example, alkyldiol, polyether diol, and polyester diol. As a representative example of the alkyldiol can be mentioned, for example, ethylene glycol, 1,3-propanediol, propylene glycol, 2,3-butanediol, 1,4-butanediol, 2-ethylbutane-1,4-diol, 1,5-pentanediol, 1,6-hexanediol, 1,7-heptanediol, 1,8-octanediol, 1,9-nonanediol, 1,4-cyclohexanediol, 1,4-dimethylolcyclohexane, 4,8-dihydroxytricyclo[5.2.1.0^{2,6}]decane, and 2,2-bis(4-hydroxycyclohexyl)propane.

Polyether diol which is an organic diol compound can be synthesized, for example, by polymerizing aldehyde, alkylene oxide, or glycol according to a known method.

For example, polyether diol is obtained by an addition polymerization of formaldehyde, ethylene oxide, propylene oxide, tetramethylene oxide, or epichlorohydrin to alkyldiol under a suitable condition. As the polyester diol which is the organic diol compound can be used, for example, an esterification reaction product obtained by reacting a saturated or unsaturated dicarboxylic acid and/or an acid anhydride thereof with an excess amount of alkyldiol, and an esterification reaction product obtained by polymerizing hydroxycarboxylic acid and/or lactone as an intramolecular ester thereof and/or lactide as an intermolecular ester thereof to alkyldiol. These organic polyol compounds can be used alone or in a combination of two or more.

As (3) the hydroxyalkyl (meth)acrylate can be mentioned 2-hydroxyethyl (meth)acrylate, 2-hydroxypropyl (meth)acrylate, and 4-hydroxybutyl (meth)acrylate. And, the urethane (meth)acrylate oligomer as an oligomer used in the invention can be also produced by reacting a compound having a (meth)acryloyl group and a hydroxyl group in one molecule with an organic diisocyanate compound at NCO/OH ratio of, for example, 0.9-1.0 and, for example in the presence of a catalyst for urethane reaction such as dibutyltin dilaurate.

### (a-1-2) Polyester (meth)acrylate oligomer

Polyester (meth)acrylate which is an oligomer used in the invention can be produced, for example, by reacting polyester polyol having a hydroxyl group at its terminus with an unsaturated carboxylic acid. Such polyester polyol can be produced representatively by an esterification reaction of a saturated or unsaturated dicarboxylic acid or an acid anhydride thereof with an excess of alkylene diol. As a representative example of dicarboxylic acid used can be mentioned, for example, oxalic acid, succinic acid, adipic acid, phthalic acid, and maleic acid. As a representative example of alkylene diol used can be mentioned, for example, ethylene glycol, propylene glycol, butanediol, and pentanediol. As a representative example of the unsaturated carboxylic acid can be mentioned, for example, acrylic acid, and methacrylic acid.

### (a-1-3) Epoxy (meth)acrylate oligomer

Epoxy (meth)acrylate oligomer which is an oligomer used in the invention is produced, for example, by using an epoxy compound and the above-mentioned unsaturated carboxylic acid at a ratio such that, for example, 0.5-1.5 equivalents of carboxyl group is based on one equivalent of epoxy group, and conducting a usual ring-opening addition reaction of acid to epoxy group. As the epoxy compound used here can be preferably mentioned, for example, a bisphonol-A-type epoxy, and a novolac-type phenolic epoxy.

### (a-1-4) Polyether (meth)acrylate oligomer,

Polyether (meth)acrylate which is an oligomer used in the invention can be produced, for example, by reacting polyether polyol such as polyethylene glycol, or polypropylene glycol with the above-mentioned unsaturated carboxylic acid.

### (a-2) Unsaturated polyester resin

On the other hand, the unsaturated polyester resin used as the (A) component can be produced, for example, by reacting an organic polyol compound with an unsaturated carboxylic acid through a known method and, if necessary, further reacting with a saturated polycarboxylic acid. As a representative example of the organic polyol used can be mentioned, for example, ethylene glycol, propylene glycol, triethylene glycol, trimethylolpropane, glycerin, and bisphenol-A. As a representative example of the unsaturated polycarboxylic acid used can be mentioned, for example, (anhydrous) maleic acid, (anhydrous) fumaric acid, and (anhydrous) itaconic acid.

These (A) components may be used in a combination of the (meth)acryloyl group-containing oligomer and the unsaturated polyester resin.

### (b) As to (B) component

The (B) component used in the invention is an unsaturated monomer capable of copolymerizing with the (A) component.

As a representative example of such an unsaturated monomer can be mentioned, for example, styrene, α-methylstyrene, chlorostyrene, vinyl toluene, methyl (meth)acrylate, ethyl (meth)acrylate, propyl (meth)acrylate, butyl (metb)acrylate, 2-ethylhexyl (meth)acrylate, ethylene glycol (meth)acrylate, cyclohexyl (meth)acrylate, glycidyl (meth)acrylate, tetrahydrofurfuryl (meth)acrylate, 2-hydroxyethyl (meth)acrylate, (meth)acrylic acid amide, 2-acrylamide-2-methylpropane sulfonic acid, (meth)acrylio acid, β-(meth)acryloyloxyethyl hydrogen phthalate, β-(meth)acryloyloxyethyl hydrogen succinate, N-vinyl-2-pyrolidone, N-vinylcaprolactam, ethylene glycol di(meth)acrylate, tripropylene glycol di(meth)acrylate, 1,6-hexanediol di(meth)acrylate, isobornyl (meth)acrylate, dimethyloltricyclodecane di(meth)acrylate, trimethylolpropane tri(meth)acrylate, and triallyl isocyanurate.

An aliphatic (meth)acrylate monomer like tripropylene glycol diacrylate (TPGDA) and 1,6-hexanediol diacrylate (1,6-HDDA), a (meth)acrylate monomer having an aliphatic structure like cyclohexyl methacrylate, and trimethylolpropane triacrylate (TMPT) are preferable.

With respect to the (B) component, the unsaturated monomers may be used alone or as a mixture thereof. When it comprises a monomer having one ethylenic double bond in one molecule and a monomer having two or more ethylenic double bond in one molecule, it is particularly preferable to raise the hardness of the formed coating film and thereby become difficult to scratch. It is preferable that the monomer having one ethylenic double bond in one molecule is styrene monomer and the content of styrene monomer to {(A)+(B)} components satisfies (styrene monomer)/{(A)+(B)} = 0.2/100-5/100 in a mass ratio, because the pot life is lengthened significantly.

The mass ratios of the (A) and (B) components depend on types of compounds used as (A) and (B) components, but they usually satisfy (A)/(B) = 20/80-80/20, more preferably 33/67-67/33. When it is within this range, the curing properties is better and hence a robust cured coating film is obtained, and also the in-mold flow properties of the coating composition is better and hence a uniform coating film is obtained without inclusion of bubbles.

### (c) As to (C) component

As the (C) component used in the invention can be mentioned a conductive particle formed by coating the surface of an inorganic particle such as an acicul ar titanium dioxide, a potassium titanate whisker, or mica with a conductive metal oxide particle.

The inorganic particle coated with the conductive metal oxide particle in the (C) component is preferable to be at least one selected from titanium dioxide, zinc oxide, alumina, silica, alkali titanate, or mica.

The conductive metal oxide particle is preferable to be an acicular titanium dioxide, a potassium titanate whisker or a squamous mica, coated with any one of tin oxide, antimony-doped tin oxide or tin-doped indium oxide.

The antimony-doped tin oxide preferably contains 0.1-5% by mass of at least one of phosphorous, aluminum or molybdenum in an oxide form.

The conductive particle (C) is more preferable to have an aspect ratio of 3-200 because of developing the conductive properties of the cured coating film.

In particular, the mass ratio of the (C) component satisfies (C)/{(A)+(B)} = 5/100-50/100, more preferably 7/100-30/100. The mass ratio of the (C) component is preferable to be not less than 5/100, because the cured coating film has sufficient conductive properties and hence an electrostatic top coating is carried out effectively. On the other hand, the mass ratio of the (C) component is preferable to be not more than 50/100, because the rising of viscosity can be suppressed within the limits and the in-mold flow properties are appropriate.

### (d) As to (D) component

The (D) component used in the invention is an organic peroxide polymerization initiator used for generating a free radical and polymerizing the (A) and (B) components. It is particularly preferable that the organic peroxide polymerization initiator contains an organic peroxide polymerization initiator having a one-minute half-life temperature of not less than 85°C but less than 95°C and an organic peroxide polymerization initiator having a one-minute half-life temperature of not less than 95°C but less than 170°C.

The organic peroxide polymerization initiator having a one-minute half-life temperature of not less than 85°C but less than 95°C includes, for example, isobutyryl peroxide, 1,1,3,3-tetramethylbutyl peroxyneodecanoate, α-cumyl peroxyneodeoanoate, di-3-methoxybutyl peroxydicarbonate, di-2-ethylhexyl peroxydicarbonate, bis(4-t-butylcyclohexyl) peroxydicarbonate, and di-isopropyl peroxydicarbonate. Bis(4-t-butylcyclohexyl) peroxydicarbonate is particularly preferable. As a representative example of the organic peroxide polymerization initiator having a one-minute half-life temperature of not less than 95°C but less than 170°C are mentioned organic peroxides such as t-butyl peroxybenzoate, t-butyl peroxyisobutyrate, t-butyl peroxy2-ethylhexanoate, t-amyl peroxy2-ethylhexanoate, t-butyl peroxyisopropylcarbonate, lauroyl peroxide, and benzoyl peroxide. t-Butyl peroxybenzoate and t-amyl peroxy2-ethylhexanoate are particularly preferable.

The mass ratio of the organic peroxide polymerization initiator as the (D) component satisfies (D)/{(A)+(B)} = 0.1/100-5/100, more preferably 0.5/100-3/100. When the compounding ratio of the organic peroxide polymerization initiator as the (D) component is less than 0.1/100, the reaction between (A) and (B) components is not successfully progressed and the failure of curing is caused not to obtain a normal coating film. While, when it exceeds 5/100, the pot life of the coating composition is shortened significantly.

### (e) As to other components

The in-mold coating composition used in the invention can further comprise at least one inorganic particle, such as calcium carbonate, or talc, having an average particle diameter of not less than 0.1 µm but not more than 20 µm as needed. As such an inorganic particle may be preferably mentioned, for example, calcium carbonate, talc, barium sulfate, aluminum hydroxide, and clay. These inorganic particles are compounded for purposes of dispersing a shrinkage stress associated with the curing of coating film, improving an adhesion to a molded product, smoothing concave and convex in surface, or improving the appearance of the surface of a molded product.

The in-mold coating composition used in the invention can further comprise at least one coloring pigment as needed. The coloring pigment can be various coloring pigments conventionally-used for a usual plastics or a coating material.

For example, titanium dioxide, or zinc oxide can be used as a white pigment, and titanium yellow can be used as a yellow pigment.

These light-colored coloring pigments are compounded for purposes of coloring the cured coating film of the in-mold coating composition in white color or light color, and developing an intended color even if coated with a light color-based top coating material having a poor hiding power.

In the invention, a release agent can be optionally used in combination in order to release a cured coating film smoothly from a mold. As the release agent can be mentioned, for example, stearic acid, hydroxystearic acid, stearate such as zinc stearate, aluminum stearate, magnesium stearate, or calcium stearate, soybean oil lecithin, silicone oil, fatty acid ester, and fatty acid alcohol dibasic acid esters. The compounding amounts of these release agents are preferable to be, for example, 0.1-5 parts by mass, more preferably 0.2-2 parts by mass based on 100 parts by mass in total of {(A)+(B)} components. When it is within this range, the effect of releasing from a mold is preferably exercised.

In the invention, a modified resin can be compounded for purpose of improving an adhesion to various resins for substrate. As the modified resin used for this purpose can be mentioned, for example, chlorinated polyolefin, maleic acid-modified polyolefin, acrylic oligomer, polyvinyl acetate, polymethyl methacrylate, and allyl ester oligomer.

The in-mold coating composition used in the invention may be further compounded with various additives such as an antistatic agent, an antioxidant, an ultraviolet absorbing agent, a curing accelerator, a pigment dispersant, an anti-foaming agent, or a plasticizer as needed.

### <Production method of in-mold-coated molded product>

With respect to the production method of the in-mold-coated molded product according to the invention, the constitution of a molding machine for carrying out it, a molding tool and an injection equipment for a coating composition are described concretely below with reference to Drawings, but these concrete molding machine, molding tool and injection equipment for a coating composition are not intended as limitations of the invention.

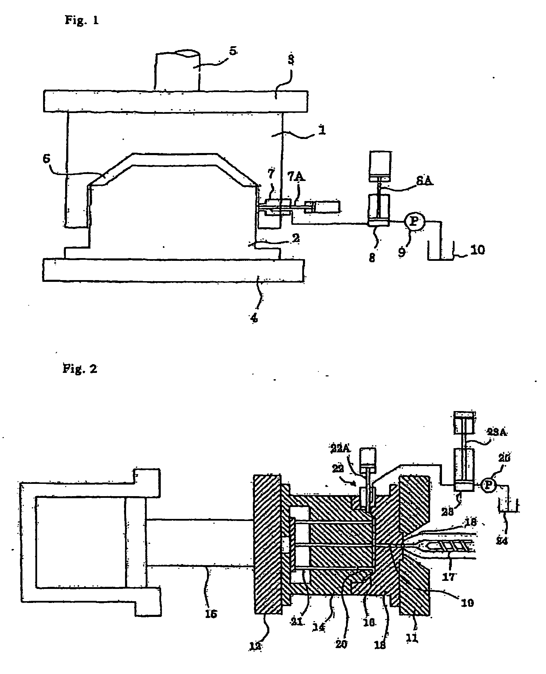

FIG. 1 shows an equipment for carrying out a compression molding method, for example, using a glass fiber-reinforced thermosetting molding material referred to as SMC. As the molding method can be used a conventional method of molding in a mold without limitations, and preferably a method described in JP-B-S55-9291 or JP-A-S61-273921 can be used.

In the equipment shown in FIG. 1, an upper mold 1 and a lower mold 2 of a separable mold are opposite molding tool members to each other. The upper mold 1 and the lower mold 2 are fixed on a movable platen 3 and a fixed platen 4 of a clamping equipment, respectively. The movable platen 3 is constituted to move back and forth by a clamping cylinder 5. A mold cavity 6 of a desired shape can be formed by the upper mold 1 and the lower mold 2, and the cavity can be extended in a direction of an in-mold molded product surface coated in the mold by the movement of the upper mold 1. The surface coated in the mold may be one surface or two or more surfaces, and thus the extension of the cavity in the direction of the surface coated in the mold may be one direction or two or more direction. The glass fiber-reinforced plastic molding material is injected between the upper mold 1 and the lower mold 2, and the clamping cylinder 5 is operated to approximate the upper mold 1 to the lower mold 2, and hence the molding material is formed into the shape of the cavity, and cured by applying a clamping pressure.

Also, the equipment shown in FIG. 1 is provided with an injector 7 comprising a shutoff pin 7A as a means of injecting an in-mold coating composition, a measuring cylinder 8 for supplying a predetermined amount of an in-mold coating composition to the injector 7, and a supply pump 9 for supplying the in-mold coating composition from its storage portion 10 to the measuring cylinder 8. At this moment, the measuring cylinder 8 is provided with a plunger regulator 8A for injection of an in-mold coating composition.

In the molding, the clamping cylinder 5 is firstly operated to separate the upper mold 1 from the lower mold 2, and the glass fiber-reinforced plastic molding material is placed on the lower mold 2, and thereafter the clamping cylinder 5 is operated to approximate the upper mold 1 to the lower mold 2 and honoe the molding material is formed into the shape of the cavity, and subjected to an application of a clamping pressure. The clamping pressure is usually 4-15 MPa. The molding temperature is determined optionally depending on a molding time, and a kind of a molding material, but it is usually suitable to be 120-180°C. It is desirable that a mold is previously set to the above-mentioned temperature before a molding material is injected, and the temperature is held until a cured coating film to be hereinafter described is obtained.

Then, in the stage wherein the molded product in the cavity is cured to the extent that it can withstand the injection and flow pressures of the in-mold coating composition, the in-mold coating composition is injected from the injector 7 between the inner wall of the upper mold 1 and the molded product surface coated in the mold in the amount such that a cured coating film of a desired film thickness or preferably having a film thickness of 20-1,000 µm can be obtained, while holding the clamping pressure as it is, or after reducing the clamping pressure, or after separating the upper mold 1 from the surface of the molded product by a distance which is larger than the desired film thickness of the cured coating film but does not disengage the fitting of the upper mold 1 and the lower mold 2 or preferably by a distance of 0.2-5 mm.

After the injection of the in-mold coating composition, an injection port is closed by the shutoff pin 7A, and the in-mold coating composition is cured on the surface of the molded product in the cavity 6, if necessary, by moving the clamping cylinder 5 to conduct an clamping operation. The pressure is usually (re)applied to 1-10 MPa so that the in-mold coating composition can uniformly coat the surface of the molded product, and then usually held for 10-300 seconds until a cured coating film is formed. The cured coating film is thus formed on the surface of the molded product, and thereafter the clamping cylinder 5 is operated to separate the upper mold 1 from the lower mold 2 and the molded product having the cured coating film is removed from the mold.

FIG. 2 shows an embodiment in the case of an injection molding method for a thermoplastic resin molding material. In FIG. 2, reference sign 11 is a fixed platen of a clamping equipment of an injection molding machine and reference sign 12 is a movable platen, and they are provided with a fixed mold member 13 and a movable mold member 14, respectively, which are opposite molding tool members to each other. The movable platen 12 is constituted to move back and forth by a clamping cylinder 15. A cavity 16 of a desired shape is formed in a fitting portion of the fixed mold member 13 and the movable mold member 14, and a thermoplastic resin molding material in a molten or softened state is injected in the cavity 16, filled and set. When a molten resin molding material is injected and filled, the cavity 16 is constituted to be able to inject the resin molding material from an injection cylinder 17 having a screw through a nozzle 18 and a sprue 19. In FIG. 2, reference sign 20 is a rib portion (boss portion) and reference sign 21 is an ejector pin in releasing.

Also, a means of injecting an in-mold coating composition in FIG. 2 comprises an injector 22 with a shutoff pin 22A, a measuring cylinder 23 for supplying a predetermined amount of an in-mold coating composition to the injector 22, and a supply pump 25 for supplying the in-mold coating composition from its storage portion 24 to the measuring cylinder 23. At this moment, the measuring cylinder 23 is provided with a plunger regulator 23A for injection of an in-mold coating composition.

In the molding, the clamping cylinder 15 is firstly operated to close the fixed mold member 13 and the movable mold member 14 and apply a clamping pressure. The clamping pressure is required to be able to withstand the injection pressure of the resin molding material. The injection pressure is usually a high pressure of 40-250 MPa in the portion of the nozzle 18. In this process, the supply pump is operated to supply a required amount of an in-mold coating composition to the measuring cylinder 23.

Then, the resin molding material in a molten or softened state is injected from the injection cylinder 17 into the cavity 16 through the nozzle 17 and the sprue 19. In the stage wherein the resin molding material is set in the mold to the extent that it can withstand the injection and flow pressures of the in-mold coating composition, the clamping pressure is reduced, or the movable mold portion 14 is moved back by a distance which is larger than the following desired film thickness of the cured coating film but does not disengage the fitting of the fixed mold member 13 and the movable mold member 14 or preferably by a distance of 0.2-5 mm. Then, the shutoff pin 22A is operated to open the injection port of the injector 22. Then, the plunger regulator 23A for injection of an in-mold coating composition of the measuring cylinder 23 is operated to inject the in-mold coating composition in the cavity 16, i.e. between the inner wall of the fixed mold member 13 and the molded resin product surface coated in the mold, in the amount such that a cured coating film of a desired film thickness or preferably having a film thickness of 20-1,000 µm can be obtained.

After the injection of the in-mold coating composition, the injection port is closed again by the shutoff pin 22A and, if necessary, the clamping cylinder 15 is moved to conduct an clamping operation, and the in-mold coating composition is pushed out to coat the surface of the molded product in the mold, and the in-mold coating composition is cured on the surface of the molded product in the cavity 16. Then, the clamping cylinder 15 is operated to separate the movable mold member 14 from the fixed mold member 13 and the molded product having the cured coating film is removed from the mold.

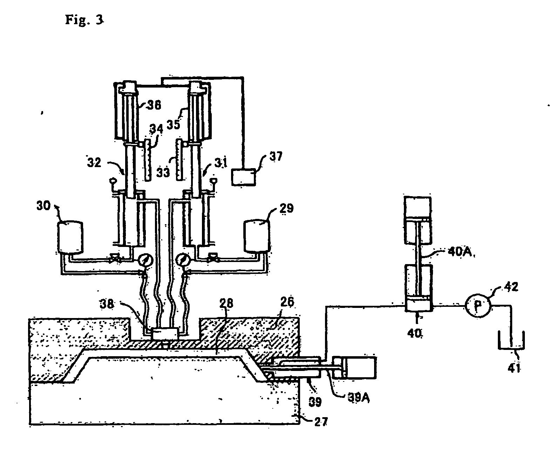

FIG. 3 shows an embodiment in the case of a RIM molding method for a urethane or dicyclopentadiene molding material. In FIG. 3, reference signs 26 and 27 are opposite molding tool members to each other.

The molding tool members 26 (fixed type) and 27 (movable type) are fixed on a fixed platen and a movable platen of a clamping equipment, respectively. The movable platen is constituted to move back and forth by a clamping cylinder. The fixed platen, movable platen and clamping cylinder of the clamping equipment are not shown in FIG. 3. A cavity 28 of a desired shape is formed by both molding tool members 26 and 27, and filled with a molding material containing dicyclopentadiene as a main component, which is cured. When the molding material containing dicyclopentadiene as a main component is filled, raw materials comprising as a main component an A liquid comprised of dicyclopentadiene and a catalyst and a B liquid comprised of dicyclopentadiene and an activating agent are temperature-modulated in storage tanks 29 and 30, respectively, and thereafter the raw materials are mixed by raising a pressure to 50-200 bars with hydraulic cylinders 35 and 36 in measuring cylinders 31 and 32, and injecting them form opposite nozzles in a mixing head 38 and impinging with each other.

On the other hand, the embodiment in FIG. 3 is provided with as a means of injecting an in-mold coating composition an injector 39 comprising a shutoff pin 39A, an in-mold coating composition-measuring cylinder 40 for supplying a predetermined amount of an in-mold coating composition to the injector 39, and a supply pump 42 for supplying the in-mold coating composition from its storage portion 41 to the measuring cylinder 40. At this moment, the measuring cylinder 40 is provided with a plunger regulator 40A for injection of an in-mold coating composition.

In the molding, the clamping cylinder is firstly operated to close the mold (molding tool members 26 and 27) and apply a clamping pressure. The clamping pressure is usually 0.5-1 MPa. Then, the molding material containing dicyclopentadiene as a main component is injected from the mixing head 38 into the cavity 28. In this process, the supply pump 42 is operated to supply a required amount of an in-mold coating composition to the measuring cylinder 40. In the stage wherein the molding material is properly cured in the mold (to the extent that it can withstand the injection and flow pressures of the in-mold coating composition), the clamping pressure is held as it is, or reduced. Then, the injection port of the injector 39 is opened by movement of the shutoff pin 39A. Then, the plunger regulator 40A for injection of an in-mold coating composition of the measuring cylinder 40 is operated to fill the cavity 28, i.e. a space between the inner wall of the mold member 26 and the molded product surface, with the in-mold coating composition.

After the shutoff pin 39A is closed again, the in-mold coating composition is cured in the mold, if necessary, by moving the clamping cylinder to conduct a clamping operation. Then, the clamping cylinder is operated to separate both tool members 26 and 27 and the coated molded product is removed from the mold.

### EXAMPLES

The invention will be described in more detail on the basis of the following Examples and Comparative Examples.

### <Synthesis of urethane oligomer>

A urethane oligomer can be produced by polymerizing according to various known methods. The synthesis example is as follows: dibutyltin dilaurate is charged into the amount of (A) component shown in Table 1, in which the amount of dibtutyltin dilaurate charged is 0.02 parts by mass based on 100 parts by mass in total of (A)-(C) components. Then, the amount of (B) component shown in Table 1 is added dropwise thereto with holding at 40°C and reacted for a sufficient time, and thereafter a solution dissolving hydroquinone, in which the amount of hydroquinone dissolved is 0.1 parts by mass based on 100 parts by mass in total of (A)-(C) components, is added dropwise to (C) component shown in Table 1, and further stirred with heating at 75°C for a sufficient time. Thus, urethane oligomers UAC-1-UAC-3 are obtained.

**Table 1**

| | (A) Diisocyanate compound | | (B) Diol compound | | (C) Hydroxy group-containing (meth)acrylate | |
|---|---|---|---|---|---|---|
| | Type | Parts by mass | Type | Parts by mass | Type | Parts by mass |
| UAC-1 | (A-1) | 349 | (B-1) | 1000 | (C-1) | 273 |
| UAC-2 | (A-2) | 840 | (B-2) | 1000 | (C-2) | 607 |
| UAC-3 | (A-3) | 500 | (B-3) | 1000 | (C-1) | 273 |

| | | | | | | |
|---|---|---|---|---|---|---|
| (A-1) 2,4- and 2,6-toluene diisocyanates (A-2) Isophorone diisocyanate (A-3) Bis(4-isocyanatophenyl)methane (B-1) Polypropylene glycol (average molecular weight of 1400) (B-2) Polycaprolactone diol (average molecular weight of 500) (B-3) Adduct of ethylene oxide with 2,2-bis(4-hydroxyphenyl) (average molecular weight of 1000) (C-1) 2-hydroxyethyl methacrylate (C-2) Pentaerythritol triacrylate | | | | | | |

### <Synthesis of epoxy oligomer>

1,000 parts by mass of an epoxy compound (trade name: EPIKOTE 828^{™} (made by Yuka Shell Epoxy Corporation)), 490 parts by mass of methacrylic acid, 3 parts by mass of triethylamine and 0.01 parts by mass of hydroquinone are charged into a reactor, and reacted at 125°C for 3 hours to obtain an epoxy oligomer EAC-1.

### <Production of conductive particle (C)>

A conductive particle (C) can be produced according to various known methods.

### · · Production of conductive particle BC-1

100 g of a rutile-type titanium dioxide powder (trade name: R-310^{™}, made by Sakai Chemical Industry CO., Ltd.) (97% or more of TiO₂, and average primary particle diameter of 0.20 µm) is dispersed in 0.3 liters of pure water, to which 16 g of trichloroacetic aicd and 19 g of sodium trichloroacetate are added as a pH buffer agent.

An acidic aqueous solution of hydrochloric acid containing 17 g of stannic chloride and 2.5 g of antimony (III) chloride and an aqueous solution of sodium hydroxide (75 g/liter) are simultaneously added over 30 minutes while holding at 90°C, and hence the coating with the coprecipitated hydroxide of tin oxide and antimony oxide is carried out. Washing with water, filtering and drying are carried out, and thereafter sintering at 550°C for 1 hour is carried out to obtain 110 g of a white powder (coating amount of 10% by mass), which has a whiteness degree of 83 and a volume resistivity of 4 Ω·cm.

### · Production of conductive particle EC-2

100 g of a squamous fluorine mica powder (trade name: MK-100^{™}, made by Coop Chemical Co., Ltd.) (whiteness degree of 95, average particle diameter of 2 µm, and aspect ratio of 20-30) is dispersed in 0.3 liters of pure water, and held at 90°C, and added with an acidic aqueous solution of hydrochloric acid containing 3.5 g of stannic chloride, and thereafter an aqueous solution of sodium hydroxide (75 g/liter) is gradually added dropwise thereto over 10 minutes so as to be pH of 2-4, and hence hydrolyzing is carried out to form a coating film of tin hydrate on the powder.

Then, the solution is held at 90°C, to which an acidic aqueous solution of hydrochloric acid containing 14 g of stannic chloride and 5 g of antimony (III) chloride and an aqueous solution of sodium hydroxide (75 g/liter) are simultaneously added dropwise over 30 minutes so as to be pH of 2-4, and hence the powder having the coating film of tin hydrate is coated with the coprecipitated hydrate of tin and antimony. The resulting powder is filtered, washed with water and dried, and thereafter sintered at 550°C for 1 hour to obtain 111 g of a white powder (coating amount of 11 % by mass), which has a whiteness degree of 83 and a volume resistivity of 370 Ω·cm.

### · Production of conductive particle EC-3

100 g of an acicular powder of rutile-type titanium dioxide (trade name: FTL^{®}-100, made by Ishihara Sangyo Co., Ltd.) (fiber length of 1.68 µm, and fiber diameter of 0.13 µm) is dispersed in 0.3 liters of pure water, to which 16 g of trichloroacetic aicd and 19 g of sodium trichloroacetate are added as a pH buffer agent.

An acidic aqueous solution of hydrochloric acid containing 17 g of stannic chloride and 2.5 g of antimony (III) chloride and an aqueous solution of sodium hydroxide (75 g/liter) are simultaneously added over 30 minutes while holding at 90°C, and hence the coating with the ooprecipitated hydroxide of tin oxide and antimony oxide is carried out. Washing with water, filtering and drying are carried out, and thereafter sintering at 550°C for 1 hour is carried out to obtain 110 g of a white powder (coating amount of 10% by mass), which has a whiteness degree of 88 and a volume resistivity of 6 Ω·cm.

### · Production of conductive particle EC-4

100 g of a rutile-type titanium dioxide powder (trade name: R-310^{™}, made by Sakai Chemical Industry CO., Ltd.) (97% or more of TiO₂, and average primary particle diameter of 0.20 µm) is dispersed in 0.3 liters of pure water, to which an acidic aqueous solution of hydrochloric acid containing 34 g of stannic chloride and 5 g of antimony trichloride and 50 milliliters of an aqueous solution of sodium hydroxide (500 g/liter) containing 0.7 g of sodium hexametaphosphate are simultaneously added dropwise over 30 minutes while holding at 90°C, whereby the coating with the coprecipitated hydroxide of tin oxide and antimony oxide containing phosphorus is carried out. Washing with water, filtering and drying are carried out, and thereafter sintering at 600°C for 1 hour is carried out to obtain 121 g of a white powder (coating amount of 20% by mass, containing 1% by mass of phosphorus), which has a whiteness degree of 87 and a volume resistivity of 7 Ω·cm.

### · Production of conductive particle EC-5

A white powder is produced in the same manner as in the conductive particle EC-3 except that an aqueous solution of sodium hydroxide containing 0.3 g of sodium aluminate is used. There is obtained 120 g of the white powder (coating amount of 20% by mass, containing 0.8% by mass of aluminum), which has a whiteness degree of 86 and a volume resistivity of 2 Ω·cm.

### <Examples 1-4 and Comparative Examples 1-5>

A mold having a cavity for obtaining a molded resin product having a product shape of 800 mm in length, 300 mm in width, 50 mm in height and 3 mm in board thickness is used to conduct an in-mold coating to a molded product according to the embodiment shown in FIG. 1. In this case, a mold temperature is set to 150°C in the upper mold and 135°C in the lower mold. First of all, an SMC molding material is put on the lower mold, and then clamped at a clamping pressure of 2400 KN and held for 80 seconds, and cured to the extent that the surface of the obtained molded product of SMC can withstand injection and flow pressures of an in-mold coating composition. Then, the clamping pressure is reduced to 360 KN and thereafter each of in-mold coating compositions of 36 cm³ having the compositions shown in Table 3 is injected between the surface of the mold and the surface of the molded product over 1.5 seconds. After the completion of injection, the clamping pressure is raised to 1440 KN over 1 second and held for 10 seconds and thereafter the clamping pressure is reduced to 960 KN and held for 80 seconds, whereby the in-mold coating composition is cured.

With respect to the resulting molded product, the appearance of the coating film, the surface resistance value, the L* value based on L*a*b* display system prescribed in JIS Z 8729 and the adhesion of the coating film to a substrate are measured. The results are shown in Table 4.

Further, the resulting molded product is subjected to an electrostatic coating under the condition shown in Table 2. The coat appearance after the top coating is evaluated. DELICON^{®} #1500 white (made by Dai Nippon Toryo Co., Ltd.) is used as a top coating material.

**Table 2**

| Items | Setting value | Remarks |
|---|---|---|
| Gun distance (cm) | 32 | |
| Shaping air pressure (Kgf/cm²) | 2.5 | |
| Air motor pressure (Kgf/cm²) | 3.5 | 18000 rpm |
| Discharge amount (cc/min) | 230 | |
| Applied voltage (kV) | -90 | |
| Conveyor speed (m/min) | 4.6 | |

### [Appearance of coating film]

The gloss, flow streak, and uniformity of the coating film are visually confirmed, and the appearance is evaluated according to the followings:
Good ··· Uniform gloss, no flow streak, and uniform appearance.
Average ··· A little unevenness of gloss and flow streak.
Bad ··· Severe unevenness of gloss and flow streak, and ununiform appearance.

### [L* value]

L* value is measured on the basis of L*a*b* display system prescribed in JIS Z 8729.

### [Surface resistance value]

The surface resistance value of the coating film is measured by using a measuring apparatus of Hiresta-UP MCP-HT450^{™} type (made by Mitsubishi Chemical Corporation), after it is left in a room at 23±2°C and 50±5% RH for 24 hours.

### [Adhesion of coating film to substrate]

The initial coat adhesion test is carried out according to JIS K 5600-5-6: Adhesion (cross-cut method). The adhesion of coating film is rated on the following 6-point scale of 0 to 5 based on the classification of test results described in JIS K 5600-5-6.

### <6-point scale>

0 ··· The out edge is fully smooth, and peelings are not present in any squares of the lattice.
1 ··· Small peelings of the coating film are present in the cut cross-point. The percentage of the affected portions in the cross-cut portions does not certainly exceed 5%.
2 ··· The coating film peels along the cut edge and/or in the cut cross-point. The percentage of the affected portions in the cross-cut portions certainly exceeds 5%, but it does not exceed 15%.
3 ··· The coating film forms large peelings partially or fully along the cut edge, and/or different portions in squares peel partially or fully. The percentage of the affected portions in the cross-cut portions certainly exceeds 15%, but it does not exceed 35%.
4 ··· The coating film forms large peelings partially or fully along the cut edge, and/or several squares peel partially or fully. The percentage of the affected portions in the cross-cut portions certainly exceeds 35%, but it does not exceed 65%.
5 ··· The degree of peelings exceeds the Classification 4.

### [Coat appearance after top coating]

Good ··· Invisible substrate, uniform gloss, and uniform appearance.

Bad ··· Visible substrate, uneven gloss, and ununiform appearance.

**Table 3**

| | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|
| (A) | UAC-1 | 8.00 | 8.00 | 8.00 | 8.00 | 2.80 | 12.00 | 9.30 | 6.40 | 7.40 |
| | EAC-1 | 30.00 | 30.00 | 30.00 | 30.00 | 10.70 | 45.00 | 34.70 | 24.20 | 28.20 |
| (B) | TMPT | 2.00 | 2.00 | 2.00 | 2.00 | 2.00 | 2.00 | 2.30 | 1.60 | 1.60 |
| | HPMA | 1.00 | 1.00 | 1.00 | 1.00 | 1.00 | 1.00 | 1.20 | 0.80 | 0.80 |
| | Styrene | 28.50 | 28.50 | 28.50 | 28.50 | 53.00 | 9.50 | 33.00 | 23.00 | 27.00 |
| (C) | EC-1 | 15.00 | --- | --- | --- | 15.00 | 15.00 | 4.00 | --- | --- |
| | EC-2 | --- | 15.00 | --- | --- | --- | --- | --- | --- | --- |
| | EC-3 | --- | --- | 15.0 | --- | --- | --- | --- | 29.00 | --- |
| | EC-4 | --- | --- | --- | 15.0 | --- | --- | --- | --- | --- |
| (D) | t-Butyl peroxybenzoate | 1.00 | 1.00 | 1.00 | 1.00 | 1.00 | 1.00 | 1.13 | 0.80 | 0.90 |
| Release agent | Zinc stearate | 0.30 | 0.30 | 0.30 | 0.30 | 0.30 | 0.30 | 0.30 | 0.30 | 0.30 |
| | Calcium stearate | 0.20 | 0.20 | 0.20 | 0.20 | 0.20 | 0.20 | 0.20 | 0.20 | 0.20 |
| Polymerization inhibitor | Para-benzoquinone | 0.03 | 0.03 | 0.03 | 0.03 | 0.03 | 0.03 | 0.03 | 0.03 | 0.03 |
| Curing accelerator | 8% Cobalt octoate | 0.10 | 0.10 | 0.10 | 0.10 | 0.10 | 0.10 | 0.10 | 0.10 | 0.10 |
| Conductive material | Ketjen black EC600™ | --- | --- | --- | --- | --- | --- | --- | --- | 4.00 |
| Inorganic particle | Talc | 10.00 | 10.00 | 10.00 | 10.00 | 10.00 | 10.00 | 10.00 | 10.00 | 15.00 |
| Coloring pigment | Titanium dioxide | --- | --- | --- | --- | --- | --- | --- | --- | 10.00 |
| Modified resin | Allyl ester resin AA531™ | 5.00 | 5.00 | 5.00 | 5.00 | 5.00 | 5.00 | 5.00 | 5.00 | 5.00 |
| (A)/(B) | | 54.7/45.3 | 54.7/45.3 | 54.7/45.3 | 54.7/45.3 | 19.4/80.6 | 82.0/18.0 | 54.7/45.3 | 54.6/45.4 | 54.8/45.2 |
| (C)/(A)+(B) | | 21.6/100 | 21.6/100 | 21.6/100 | 21.6/100 | 21.6/100 | 21.6/100 | 4.88/100 | 50.4/100 | 0/100 |
| (D)/(A)+(B) | | 1.4/100 | 1.4/100 | 1.4/100 | 1.4/100 | 1.4/100 | 1.4/100 | 1.4/100 | 1.4/100 | 1.4/100 |

| | | | | | | | | | | |
|---|---|---|---|---|---|---|---|---|---|---|
| TMPT: trimethylolpropane triacrylate. HPMA: 2-hydroxypropyl methacrylate. Ketjen black EC600^{™}: conductive carbon black (made by Ketjen Black International Corporation). Talc: average particle diameter of 2.5 µm. Allyl ester resin AA531^{™}: 70% by mass of allyl ester oligomer, and 30% by mass of styrene (corresponding to B component) (made by Showa Denko Corporation). | | | | | | | | | | |

**Table 4**

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Appearance of coating film | Good | Good | Good | Good | Average | Bad | Good | Bad | Average |
| L* value | 83.5 | 78.5 | 80.8 | 833 | 77.6 | 78.3 | 71.1 | 80.1 | 35.5 |
| value [Ω/□] | 1.1×10⁶ | 9.9×10⁵ | 8.9×10⁵ | 9.6×10⁵ | 7.7×10⁶ | 6.5×10⁷ | >10¹⁰ | 2.3×10⁴ | 7.5×10⁴ |
| Adhesion of coating film to substrate | 0 | 1 | 0 | 0 | 3 | 4 | 0 | 3 | 1 |
| Coat appearance after top coating | Good | Good | Good | Good | Bad | Bad | Bad | Bad | Bad |

### <Examples 5 and 6>

A mold having a cavity for obtaining a molded resin product having a box shape of 300 mm in length, 200 mm in width, 30 mm in height and 2.5 mm in board thickness is used to conduct an in-mold coating to a molded product according to the embodiment shown in FIG. 2. A mold temperature is set to 100°C in the fixed mold and 80°C in the movable mold, and a barrel temperature is heated to 180°C. First of all, a rubber-modified polypropylene resin is melted with heating in the injection cylinder, and then injected into the mold clamped at a clamping pressure of 3,000 KN over 1.5 seconds, and then held at a pressure of 40 MPa for 5 seconds. It is cooled in the situation subjected to the clamping pressure for 40 seconds, and solidified to the extent that the surface of the obtained molded product can withstand injection and flow pressures of an in-mold coating composition. Then, the movable mold is spaced about 0.5 mm apart, and thereafter each coating composition shown in Table 5 of 9 cm³ is injected between the surface of the mold and the surface of the molded product over about 0.5 seconds. After the completion of injection, the clamping pressure is raised to 200 KN over 1 second and held for 120 seconds, whereby the in-mold coating composition is cured.

**Table 5**

| | | Example 5 | Example 6 |
|---|---|---|---|
| (A) | UAC-2 | 20.0 | 20.0 |
| (B) | HDDA | 30.0 | 30.0 |
| | DCPA | 10.0 | 10.0 |
| (C) | EC-3 | 15.0 | 15.0 |
| (D) | Bis(4-t-butylcyclohexyl) perox ydi carbonate | 1.0 | 1.0 |
| Release agent | Zinc stearate | 0.3 | 0.3 |
| | ZELEC-NE™ | 0.2 | 0.2 |
| Inorganic particle | Talc | 5.0 | |
| Coloring pigment | Titanium dioxide | | 5.0 |
| Modified resin | Superchlon^{®} 822S | 30.0 | 30.0 |
| | Adekastab^{®} NA-11 | | 0.3 |
| Plasticizer | TXIB | 1.0 | 1.0 |
| (A)/(B) | | 33.3/66.7 | 33.3/66.7 |
| (C)/(A)+(B) | | 25/100 | 25/100 |
| (D)/(A)+(B) | | 1.7/100 | 1.7/100 |

| | | | |
|---|---|---|---|
| HDDA: 1,6-hexanediol diacrylate. DCPA: dimethyloltricyclodecane diacrylate. ZELEC-NE^{™}: neutralized alcohol phosphate (made by DuPont Corporation). Superchlon^{®} 822S: chlorinated polyolefin (made by Nippon Paper Corporation). Adekastab^{®} NA-11: a mental salt of a phosphoric acid ester (made by Asahi Denka Corporation). TXIB: 2,2,4-trimethy-1,8-pentanediol diisobutylate | | | |

With respect to the resulting molded product, the appearance of the coating film, the surface resistance value, the L* value based on L*a*b* display system prescribed in JIS Z 8729 and the adhesion of the coating film to a substrate are measured in the same manner as in the above Examples. The results are shown in Table 6.

Further, the resulting molded product is subjected to an electrostatic coating under the same condition as described above. The coat appearance after the top coating is evaluated. In this case, PLANITTO^{®}#3600PA white (made by Dai Nippon Toryo Co., Ltd.) is used as a top coating material.

**Table 6**

| | Example 5 | Example 6 |
|---|---|---|
| Appearance of coating film | Good | Good |
| L* value | 81.1 | 90.5 |
| Surface resistance value [Ω/□] | 1.0×10⁵ | 2.3×10⁶ |
| Adhesion of coating film to substrate | 0 | 0 |
| Coat appearance after top coating | Good | Good |

### <Examples 7-13 and Comparative Examples 6-8>

A mold having a cavity for obtaining a molded resin product having a box shape of 300 mm in length, 200 mm in width, 30 mm in height and 2.5 mm in board thickness is used to conduct an in-mold coating to a molded product according to the embodiment shown in FIG. 2. A mold temperature is set to 95°C in the fixed mold and 75°C in the movable mold, and a barrel temperature is heated to 200°C. First of all, an ABS resin is melted with heating in the injection cylinder, and then injected into the mold clamped at a clamping pressure of 3,500 KN over 1 second, and cooled for 30 seconds, and set to the extent that the surface of the obtained molded product can withstand injection and flow pressures of an in-mold coating composition.

Then, the movable mold is spaced about 1 mm apart, and thereafter each coating composition shown in Table 7 of 13 cm³ is injected between the surface of the mold and the surface of the molded product over 0.5 seconds. After the completion of injection, the clamping pressure is raised to 200 KN over 1 second and held for 60 seconds, whereby the in-mold coating composition is cured.

**Table 7**

| | | Example 7 | Example 8 | Example 9 | Example 10 | Example 11 | Example 12 | Example 13 | Comparative Example 6 | Comparative Example 7 | Comparative Example 8 |
|---|---|---|---|---|---|---|---|---|---|---|---|
| (A) | UAC-2 | 30.0 | 28.0 | 30.0 | 30.0 | 30.0 | 30.0 | 27.0 | 30.0 | 30.0 | 31.0 |
| | UAC-3 | --- | --- | --- | --- | --- | --- | --- | --- | --- | --- |
| | EAC-1 | --- | --- | --- | --- | --- | --- | --- | --- | --- | --- |
| (B) | TPGDA | 45.0 | 42.0 | 45.0 | 44.0 | 45.0 | 44.0 | 38.0 | 45.0 | 45.0 | 46.5 |
| | Styrene | --- | --- | --- | 1.0 | | 1.0 | --- | --- | --- | --- |
| (C) | EC-3 | 15.0 | 15.0 | -- | 15.0 | 15.0 | 15.0 | 15.0 | 15.0 | 15.0 | --- |
| | EC-5 | --- | --- | 15.0 | --- | --- | --- | --- | --- | --- | --- |
| (D) | Bis(4-t-butyl-cyclohexyl) peroxydicarbonate | 1.0 | 1.0 | 1.0 | 1.0 | 1.0 | 1.0 | 1.0 | 0.06 | 4.0 | 1.0 |
| | t-Amyl-peroxy-2-ethylhexanoate | --- | --- | --- | --- | --- | 0.2 | --- | --- | --- | --- |
| Release agent | Zinc stearate | 0.8 | 0.8 | 0.8 | 0.8 | 0.8 | 0.8 | 0.8 | 0.8 | 0.8 | 0.8 |
| Conductive material | Ketjen black EC600™ | --- | --- | --- | --- | --- | --- | --- | --- | --- | 4.0 |
| Inorganic particle | Talc | 10.0 | 10.0 | 10.0 | 10.0 | 10.0 | 10.0 | 10.0 | 10.0 | 10.0 | 10.0 |
| Coloring pigment | Titanium dioxide | --- | 5.0 | --- | --- | --- | --- | --- | --- | --- | 10.0 |
| Modified resin | Allyl ester resin AA120 | --- | --- | --- | --- | --- | --- | 10.0 | --- | --- | --- |
| Polymerization inhibitor | Hydroquinone | --- | --- | --- | --- | 0.01 | --- | --- | --- | --- | --- |
| Plasticizer | TXIB | 1.0 | 1.0 | 1.0 | 1.0 | 1.0 | . 1.0 | 1.0 | 0.06 | 4.0 | 1.0 |
| (A)/(B) | | 40/60 | 40/60 | 40/60 | 40/60 | 40/60 | 40160 | 41.5/58.5 | 40/60 | 40/60 | 40/60 |
| (C)/(A)+(B) | | 20/100 | 21.4/100 | 20/100 | 20/100 | 20/100 ' | 20/100 | 23/100 | 20/100 | 20/100 | 0/100 |
| (D)/(A)+(B) | | 1.3/100 | 1.4/100 | 1.3/100 | 1.3/100 | 1.3/100 | 1.6/100 | 1.4/100 | 0.08/100 | 5.3/100 | 1.3/100 |

| | | | | | | | | | | | |
|---|---|---|---|---|---|---|---|---|---|---|---|
| TPGDA: tripropylene glycol diacrylate Allyl ester resinAA120: 70% by mass of allyl ester oligomer, and 30% by mass of diallyl phthalate (corresponding to B component) (made by Showa Denko Corporation). | | | | | | | | | | | |

With respect to the resulting molded product, the appearance of the coating film, the surface resistance value, the L* value based on L*a*b* display system prescribed in JIS Z 8729 and the adhesion of the coating film to a substrate are measured in the same manner as in the above Examples. The results are shown in Table 8.

Further, the resulting molded product is subjected to an electrostatic coating under the same condition as described above. The coat appearance after the top coating is evaluated. In this case, PLANITTO^{®} #3600PA white (made by Dai Nippon Toryo Co., Ltd.) is used as a top coating material.

**Table 8**

| | Example 7 | Example 8 | Example 9 | Example 10 | Example 11 | Example 12 | Example 13 | Comparative Example 6 | Comparative Example 7 | Comparative Example 8 |
|---|---|---|---|---|---|---|---|---|---|---|
| Appearance of coating film | Good | Good | Good | Good | Good | Good | Good | Average | Bad | Average |
| L* value | 80.5 | 91.1 | 80.0 | 80.3 | 80.1 | 80.5 | 80.5 | 76.0 | 81.1 | 33.8 |
| Surface resistance value [Ω/□] | 1.1×10⁶ | 2.9×10⁶ | 2.0×10⁶ | 9.6×10⁵ | 2.7×10⁶ | 9.9×10⁵ | 1.5×10⁶ | 7.5×10⁸ | 8.5×10⁵ | 5.0×10⁴ |
| Adhesion of coating film to substrate | 0 | 0 | 0 | 0 | 0 | 0 | 0 | 2 | 4 | 1 |
| Coat appearance after top coating | Good | Good | Good | Good | Good | Good | Good | Bad | Bad | Bad |

### <Examples 14-17 and Comparative Example 9>

A mold having a cavity for obtaining a molded resin product using dicyclopentadione as a main raw material and having a box shape of 400 mm in length, 400 mm in width and 30 mm in height is used to conduct an in-mold coating to a molded product according to the embodiment shown in FIG. 3. In this case, a mold temperature is set to 95°C in the upper mold and 60°C in the lower mold. First of all, a molding material containing dicyclopentadiene as a main raw material is injected into the mold clamped at a clamping pressure of 160 KN, and then cured for 60 seconds

Then, each in-mold coating composition shown in Table 9 of 32 cm³ is injected between the surface of the mold and the surface of the molded product over about 1 second, while holding the clamping pressure. After the completion of injection, it is held for 200 seconds, whereby the in-mold coating composition is cured.

**Table 9**

| | | Examples | | | | Comparative Example |
|---|---|---|---|---|---|---|
| | | Example 14 | Example 15 | Example 16 | Example 17 | Comparative Example 9 |
| (A) | UAC-2 | 30.0 | 20.0 | 30.0 | 30.0 | 31.0 |
| | UAC-3 | --- | --- | --- | --- | --- |
| | EAC-1 | --- | 10.0 | --- | --- | --- |
| (B) | TPGDA | 45.0 | 45.0 | 44.0 | 45.0 | 46.5 |
| | Styrene | --- | --- | 1.0 | --- | --- |
| (C) | EC-3 | 15.0 | 15.0 | 15.0 | 15.0 | --- |
| | EC-5 | --- | --- | --- | --- | --- |
| (D) | Bis(4-t-tutylcyclohexyl) peroxydicarbonate | 1.0 | 1.0 | 0.8 | 0.8 | 1.0 |
| | t-Amyl peroxy2-ethylhexanoate | --- | --- | 0.4 | 0.4 | --- |
| Release agent | Zinc stearate | 0.8 | 0.8 | 0.8 | 0.8 | 0.8 |
| Conductive material | Ketjen black EC600™ | --- | --- | --- | --- | 4.0 |
| Inorganic particle | Talc | 10.0 | 10.0 | 10.0 | 10.0 | 10.0 |
| Plasticizer | TXIB | 1.0 | 1.0 | 0.8 | 0.8 | 1.0 |
| (A)/(B) | | 40/60 | 40/60 | 40/60 | 40/60 | 40/60 |
| (C)/(A)+(B) | | 20/100 | 20/100 | 20/100 | 20/100 | 0/100 |
| (D)/(A)+(B) | | 1.3/100 | 1.3/100 | 1.6/100 | 1.6/100 | 1.3/100 |

With respect to the resulting molded product, the appearance of the coating film, the surface resistance value, the L* value based on L*a*b* display system prescribed in JIS Z 8729 and the adhesion of the coating film to a substrate are measured in the same manner as in the above Examples. The results are shown in Table 10.

Further, the resulting molded product is subjected to an electrostatic coating under the same condition as described above. The coat appearance after the top coating is evaluated. In this case, PLANITTO^{®}#3600PA white (made by Dai Nippon Toryo Co., Ltd.) is used as a top coating material.

**Table 10**

| | Examples | | | | Comparative Example |
|---|---|---|---|---|---|
| | Example 14 | Example 15 | Example 16 | Example 17 | Comparative Example 9 |
| Appearance of coating film | Good | Good | Good | Good | Bad |
| L* value | 82.3 | 91.9 | 82.1 | 82.8 | 15.5 |
| Surface resistance value [Ω/□] | 1.7×10⁶ | 3.9×10⁶ | 2.5×10⁶ | 1.1×10⁶ | 4.5×10⁴ |
| Adhesion of coating film to substrate | 1 | 1 | 1 | 1 | 5 |
| Coat appearance after top coating | Good | Good | Good | Good | Bad |

## Claims

1. An in-mold coating composition **characterized by** comprising the following components:
(A) at least one selected from a urethane oligomer, an epoxy oligomer, a polyester oligomer and a polyether oligomer each having a (meth)acryloyl group, or an unsaturated polyester resin,
(B) a monomer capable of copolymerizing with the (A) component,
(C) a conductive particle being an inorganic particle whose surface is coated with a conductive metal oxide particle, and
(D) an organic peroxide polymerization initiator, wherein mass ratios of the (A) and (B) components satisfy (A)/(B) = 20/80-80/20,
a mass ratio of the (C) component satisfies (C)/{(A)+(B)} = 5/100-50/100, and
a mass ratio of the (D) component satisfies (D)/{(A)+(B)} = 0.1/100-5/100.

2. An in-mold coating composition according to claim 1, wherein the inorganic particle coated with the conductive metal oxide particle in the (C) component is at least one selected from titanium dioxide, zinc oxide, alumina, silica, alkali titanate, or mica.

3. An in-mold coating composition according to claim 1 or 2, wherein the conductive metal oxide particle coating the surface of the inorganic particle in the (C) component is at least one selected from tin oxide, antimony-doped tin oxide, or tin-doped indium oxide.

4. An in-mold coating composition according to claim 3, wherein the antimony-doped tin oxide contains 0.1-5% by mass of at least one of phosphorous, aluminum or molybdenum in an oxide form.

5. An in-mold coating composition according to any one of claims 1-4, wherein the conductive particle as the (C) component has an aspect ratio of 3-200.

6. An in-mold coating composition according to any one of claims 1-5, wherein the inorganic particle coated with the conductive metal oxide particle in the (C) component is an acicular titanium dioxide, a potassium titanate whisker, or a squamous mica.

7. An in-mold coating composition according to any one of claims 1-6, wherein the monomer capable of copolymerizing with the (A) component as the (B) component contains at least a styrene monomer, a content of which satisfies (Styrene monomer)/{(A)+(B)} = 0.2/100-5/100 in a mass ratio.

8. An in-mold coating composition according to any one of claims 1-7, wherein the organic peroxide polymerization initiator as the (D) component contains an organic peroxide polymerization initiator having a one-minute half-life temperature of not less than 85°C but less than 95°C and an organic peroxide polymerization initiator having a one-minute half-life temperature of not less than 95°C but less than 170°C.

9. An in-mold-coated molded product obtained with an injection molding method, comprising the following steps of:
clamping a mold composed of a fixed mold member and a movable mold member,
molding a resin in a cavity of the mold,
injecting an in-mold coating composition in the cavity,
curing the injected in-mold coating composition, and
removing a coated molded product after the curing of the in-mold coating composition, wherein the in-mold coating composition is an in-mold coating composition as claimed in any one of claims 1-8.

10. An in mold-coated molded product according to claim 9, wherein the molding injection method is selected from an injection compression molding method, an injection press molding method, a compression molding method or a reaction injection molding method.

## Patentansprüche

1. In-Mold-Coating-Zubereitung, **gekennzeichnet dadurch, dass** sie die folgenden Komponenten umfasst:
(A) wenigstens eines der folgenden Oligomere, gewählt aus einem Urethan-Oligomer, einem Epoxy-Oligomer, einem Polyester-Oligomer und einem Polyether-Oligomer, wobei jedes Oligomer eine (Meth-) Acryloyl-Gruppe oder ein ungesättigtes Polyester-Harz aufweist;
(B) ein Monomer, das befähigt ist, mit der Komponente (A) zu copolymerisieren;
(C) ein leitendes Teilchen, das ein anorganisches Teilchen ist, dessen Oberfläche mit einem leitenden Metalloxid-Teilchen beschichtet ist; und
(D) einen organischen Peroxid-Polymerisations-Initiator, worin Massenverhältnisse der (A)- und (B)-Komponenten der Bedingung (A)/(B) = 20/80 bis 80/20 genügen,
ein Massenverhältnis der (C)-Komponente der Bedingung: (C)/{(A) + (B)} = 50/100 bis 50/100 genügt, und
ein Massenverhältnis der (D)-Komponente der Bedingung: (D)/{(A) + (B)} = 0,1/100 bis 5/100 genügt.

2. In-Mold-Coating-Zubereitung nach Anspruch 1, worin das anorganische Teilchen in der (C)-Komponente, das beschichtet ist mit dem leitenden Metalloxid-Teilchen, wenigstens eine Komponenten ist, die gewählt ist aus Titandioxid, Zinkoxid, Aluminiumoxid, Siliciumoxid, Alkalimetalltitanat oder Glimmer.

3. In-Mold-Coating-Zubereitung nach Anspruch 1 oder 2, worin das leitende Metalloxid-Teilchen, das die Oberfläche des anorganischen Teilchens in der (C)-Komponente beschichtet, wenigstens eine Verbindung ist, die gewählt ist aus Zinnoxid, mit Antimon dotiertem Zinnoxid oder mit Zinn dotiertem Indiumoxid.

4. In-Mold-Coating-Zubereitung nach Anspruch 3, worin das mit Antimon dotierte Zinnoxid 0,1 bis 5 Massen-% von wenigstens einer der Verbindungen Phosphor, Aluminium oder Molybdän in einer Oxid-Form enthält.

5. In-Mold-Coating-Zubereitung nach irgendeinem der Ansprüche 1 bis 4, worin das leitende Teilchen als die (C)-Komponente ein Seitenlängen-Verhältnis von 3 bis 200 hat.

6. In-Mold-Coating-Zubereitung nach irgendeinem der Ansprüche 1 bis 5, worin das anorganische, mit dem leitenden Metalloxid-Teilchen beschichtete Teilchen in der (C)-Komponente ein nadelkristallförmiges Titandioxid, ein Kaliumtitanat-Whisker oder ein schuppenartiger Glimmer ist.

7. In-Mold-Coalting- Zubereitung nach irgendeinem der Ansprüche 1 bis 6, worin das Monomer, das in der Lage ist, mit der (A)-Komponente als die (B)-Komponente zu copolymerisieren, wenigstens ein Styrol-Monomer enthält, dessen Gehalt der Gleichung (Styrol-Monomer)/{(A) + (B)} = 0,2/100 bis 5/100 genügt, angegeben als Massenverhältnis.

8. In-Mold-Coating-Zubereitung nach irgendeinem der Ansprüche 1 bis 7, worin der organische Peroxid-Polymerisations-Initiator als die (D)-Komponente einen organischen Peroxid-Polymerisations-Initiator, der eine Ein-Minuten-Halbwertszeit-Temperatur von nicht weniger als 85 °C, aber weniger als 95 °C hat, und einen organischen Peroxid-Polymerisations-Initiator enthält, der eine Ein-Minuten-Halbwertszeit-Temperatur von nicht weniger als 95 °C, aber weniger als 170 °C hat.

9. Durch In-Mold-Coating beschichtetes, geformtes Produkt, erhalten mit einem Spritzform-Verfahren, das die Schritte umfaßt, daß man
- eine Form klammert, die aus einem fixierten Form-Element und einem bewegbaren Form-Element aufgebaut ist;
- ein Harz in einem Hohlraum der Form formt;
- eine In-Mold-Coating-Zubereitung in den Hohlraum einspritzt;
- die eingespritzte In-Mold-Coating-Zubereitung härtet; und
- ein mit einem Überzug versehenes, geformtes Produkt nach dem Härten der In-Mold-Coating-Zubereitung entfernt, worin die In-Mold-Coating-Zubereitung eine In-Mold-Coating-Zubereitung ist, wie sie in irgendeinem der Ansprüche 1 bis 8 beansprucht ist.

10. Durch In-Mold-Coating beschichtetes, geformtes Produkt nach Anspruch 9, worin das Spritzform-Verfahren gewählt ist aus einem Einspritz-Kompressions-Formverfahren, einem Einspritz-Press-Formverfahren, einem Kompressions-Formverfahren oder einem Reaktionsspritz-Formverfahren.

## Revendications

1. Composition de revêtement dans le moule, **caractérisée en ce qu'**elle comprend les composants suivantes :
(A) au moins un composé choisi parmi un oligomère d'uréthane, un oligomère d'époxy, un oligomère de polyester et un oligomère de polyéther, ayant chacun un groupe (méth)acryloyle, ou une résine de polyester insaturé,
(B) un monomère capable de copolymérisation avec le composant (A),
(C) une particule conductrice qui est une particule inorganique dont la surface est revêtue d'une particule d'oxyde métallique conductrice, et
(D) un initiateur de polymérisation de type peroxyde organique, dans laquelle les rapports en masse des composants (A) et (B) satisfont (A)/(B) = 20/80 à 80/20,
un rapport en masse du composant (C) satisfait (C)/{(A)+(B)} = 5/100 à 50/100, et
un rapport en masse du composant (D) satisfait (D)/{(A)+(B)} = 0,1/100 à 5/100.

2. Composition de revêtement dans le moule selon la revendication 1, dans laquelle la particule inorganique revêtue de la particule d'oxyde métallique conductrice dans le composant (C) est au moins un composé choisi parmi le dioxyde de titane, l'oxyde de zinc, l'alumine, la silice, le titanate alcalin ou le mica.

3. Composition de revêtement dans le moule selon la revendication 1 ou 2, dans laquelle la particule d'oxyde métallique conductrice qui revêt la surface de la particule inorganique dans le composant (C) est au moins un composé choisi parmi l'oxyde d'étain, l'oxyde d'étain dopé à l'antimoine ou l'oxyde d'indium dopé à l'étain.

4. Composition de revêtement dans le moule selon la revendication 3, dans laquelle l'oxyde d'étain dopé à l'antimoine contient 0,1 à 5 % en masse d'au moins l'un parmi le phosphore, l'aluminium ou le molybdène sous forme d'oxyde.

5. Composition de revêtement dans le moule selon l'une quelconque des revendications 1 à 4, dans laquelle la particule conductrice en tant que composant (C) présente un rapport des côtés de 3 à 200.

6. Composition de revêtement dans le moule selon l'une quelconque des revendications 1 à 5, dans laquelle la particule inorganique revêtue de la particule d'oxyde métallique conductrice dans le composant (C) est un dioxyde de titane aciculaire, une trichite de titanate de potassium ou un mica squameux.

7. Composition de revêtement dans le moule selon l'une quelconque des revendications 1 à 6, dans laquelle le monomère capable de copolymérisation avec le composant (A) en tant que composant (B) contient au moins un monomère styrène, dont la teneur satisfait (monomère styrène)/{(A)+(B)} = 0,2/100 à 5/100 dans un rapport en masse.

8. Composition de revêtement dans le moule selon l'une quelconque des revendications 1 à 7, dans laquelle l'initiateur de polymérisation de type peroxyde organique en tant que composant (D) contient un initiateur de polymérisation de type peroxyde organique ayant une température de demi-vie d'une minute d'au moins 85°C, mais inférieure à 95°C et un initiateur de polymérisation de type peroxyde organique ayant une température de demi-vie d'une minute d'au moins 95°C, mais inférieure à 170°C.

9. Produit moulé revêtu dans le moule obtenu par un procédé de moulage par injection, comprenant les étapes suivantes de :
serrage d'un moule constitué d'un élément de moule fixe et d'un élément de moule mobile,
moulage d'une résine dans une cavité du moule,
injection d'une composition de revêtement dans le moule dans la cavité,
durcissement de la composition de revêtement dans le moule injectée, et
retrait d'un produit moulé revêtu après le durcissement de la composition de revêtement dans le moule, dans lequel la composition de revêtement dans le moule est une composition de revêtement dans le moule selon l'une quelconque des revendications 1 à 8.

10. Produit moulé revêtu dans le moule selon la revendication 9, dans lequel le procédé de moulage par injection est choisi parmi un procédé de moulage par injection-compression, un procédé de moulage par injection sous presse, un procédé de moulage par compression ou un procédé de moulage par injection avec réaction.
